# EUROPEAN PATENT APPLICATION

(11) **EP 4 742 626 A1**
(43) Date of publication of application: **13.05.2026**
(21) Application number: 25214754.1
(22) Date of filing: 10.11.2025
(51) Int. Cl.: H04L 65/80, H04W 36/30, G10L 13/08

(54) **MEDIA AUTO-RECOVERY METHOD AND SYSTEM FOR DIGITAL COMMUNICATION**

(30) Priority: 11.11.2024 US 202418943803
(71) Applicant: Mitel Networks Corporation, Ottawa, Ontario K2K 3K1 (CA)
(72) Inventor: Brochonski, Michael, 82620265 Curitiba (BR); Braganza, Jonathan, Ottawa, K2E 6P2 (CA)
(74) Representative: McDougall, James

(57) **Abstract**

A computer-implemented method for switching communication mediums during a communication is disclosed that includes monitoring, by a signal strength engine of a carrier server, a signal strength of the communication between a first user device and a second user device; determining, by the carrier server, if the signal strength is subject to a signal loss or the reception is determined below the threshold; and switching by the carrier server, the communication from a first communication medium to a second communication medium.

## Description

### Background

There are many methods for communicating with other individuals: telephone calls, video calls, or even text messages. For example, cell phones are a common platform for such communication with various communication types that can be used, ranging from video, audio, and text messages. Yet, typically, people can be communicating using a certain medium but if the quality of the medium deteriorates to the point of it being unusable, the result will be that the conversation will be disconnected.

Prior attempts to address this problem have fallen short. This disclosure resolves these and other problems of the art.

### Summary

A first aspect of this disclosure provides a computer-implemented method for switching communication mediums during a communication, comprising: monitoring, by a signal strength engine of a carrier server, a signal strength of the communication between a first user device and a second user device; determining, by the carrier server, if the signal strength is subject to a signal loss or the reception is determined below the threshold; and switching by the carrier server, the communication from a first communication medium to a second communication medium.

The computer-implemented method may further comprise: sending, by the carrier server, audio data of the first user device to the second user device; and upon determining, by the carrier server, the signal strength is restored or stable with respect to previous signal loss or the reception being below the threshold, switching the communication back to the first communication medium from the second communication medium.

The switching the communication from the first communication medium to the second communication medium may comprise only switching the first user device or for the second user device to the second communication medium.

If the signal loss and/or the reception deteriorates below the threshold, then only the first user device and/or the second user device experiencing signal loss or comprising the reception below the threshold may be switched to the second communication medium comprising a voice call with auto-fill video.

The communication may be a voice call, wherein if the signal loss and/or the reception deteriorates below the threshold, then the voice call remains active and only the first user device and/or the second user device experiencing signal loss or comprising the reception below the threshold may be switched to the second communication medium comprising text messaging converted to voice and sent to the other user device.

The communication may be a voice call and the second communication medium may comprise reconstructed text messaging, the operations may further comprise: extracting text message data of a portion of the communication from only the first user device and/or the second user device experiencing signal loss or comprising the reception below the threshold is switched to the second communication medium; and reconstructing the extracted text message data, using at least a neural codec language model, a voice reconstruction profile developed from an initial portion of the communication, and the extracted text message data, to a reconstructed voice data feed of the first user device and/or the second user device experiencing signal loss or comprising the reception below the threshold.

The computer-implemented method may further comprise: upon determining, using the signal strength engine, when the communication between the first user device and the second user device is below a threshold for the second communication medium, switching the communication from the second communication medium to a third communication medium.

A second aspect of this disclosure provides a computer-implemented method for auto-recovery of a communication, comprising: upon determining, using at least a carrier server, when the communication between a first user device and a second user device is subject to signal loss or comprises a reception below a threshold for a first communication medium, switching the communication from the first communication medium to a second communication medium.

The determining, using at least the carrier server, when the communication between the first user device and the second user device is subject to signal loss or comprises the reception below the threshold may comprise analyzing in real-time whether the first user device and/or the second user device is experiencing signal loss or comprises the reception below the threshold; and the switching the communication from the first communication medium to a second communication medium comprises only switching, for the first user device and/or the second user device experiencing signal loss or comprising the reception below the threshold, from the first communication medium to a second communication medium.

If the signal loss and/or the reception deteriorates below the threshold, then only the first user device and/or the second user device experiencing signal loss or comprising the reception below the threshold may be switched to the second communication medium comprising a voice call with auto-fill video.

The communication may be a voice call, wherein if the signal loss and/or the reception deteriorates below the threshold, then the voice call may remain active and only the first user device and/or the second user device experiencing signal loss or comprising the reception below the threshold is switched to the second communication medium comprising text messaging reconstructed, using at least a neural codec language model, user voice metadata and the text messaging, to a voice data feed of the first user device and/or the second user device experiencing signal loss or comprising the reception below the threshold.

The communication may be a voice call and the second communication medium may comprise reconstructed text messaging, the method may further comprise: extracting text message data of a portion of the communication from only the first user device and/or the second user device experiencing signal loss or comprising the reception below the threshold is switched to the second communication medium; and reconstructing the extracted text message data, using at least a neural codec language model, a voice reconstruction profile developed from an initial portion of the communication, and the extracted text message data, to a reconstructed voice data feed of the first user device and/or the second user device experiencing signal loss or comprising the reception below the threshold.

The computer-implemented method may further comprise: transmitting the reconstructed voice data feed to the other of the first user device and/or the second user device not experiencing signal loss or comprising the reception below the threshold from the first communication medium to a second communication medium.

The first communication medium may be a video call medium comprising a receive bandwidth of at least approximately 0.5 Mbps; or wherein the first communication medium is a video call medium comprising a send bandwidth of at least approximately 0.5 Mbps.

The second communication medium may be an audio call medium comprising at least a Relative Signal Strength (RSSI) of approximately -60dBm.

The first communication medium may be an audio call medium comprising at least a Relative Signal Strength (RSSI) of approximately -60dBm.

A third aspect of this disclosure provides a communication system configured to switch communication mediums during a communication, comprising: a processor; a carrier server configured to be in communication with a first user device and a second user device of the communication, the carrier server comprising a signal strength engine; and a tangible, non-transitory memory configured to communicate with the processor, the tangible, non-transitory memory having instructions stored thereon that, in response to execution by the processor, cause the processor to perform operations comprising: determining, using the signal strength engine, if the communication between the first user device and the second user device is subject to signal loss or comprises a reception below a threshold for a first communication medium; for the communication that is subject to signal loss or the reception is determined below the threshold, switching by the carrier server the communication from the first communication medium to a second communication medium.

The determining, using the signal strength engine, if the communication between the first user device and the second user device is subject to signal loss or comprises the reception below the threshold comprises analyzing in real-time whether the first user device and/or the second user device is experiencing signal loss or comprises the reception below the threshold.

The communication may be a voice call, wherein the operations may comprise if the signal loss and/or the reception deteriorates below the threshold, then the voice call remains active and only the first user device and/or the second user device experiencing signal loss or comprising the reception below the threshold is switched to the second communication medium comprising text messaging converted to voice and sent to the other user device.

The communication may be a voice call, wherein the operations may comprise if the signal loss and/or the reception deteriorates below the threshold, then the voice call remains active and only the first user device and/or the second user device experiencing signal loss or comprising the reception below the threshold is switched to the second communication medium comprising text messaging reconstructed, using at least a neural codec language model, user voice metadata and the text messaging, to a voice data feed of the first user device and/or the second user device experiencing signal loss or comprising the reception below the threshold.

### Brief Description of the Drawings

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements and wherein:
FIG. 1 is a block diagram of an example system according to aspects of this disclosure.
FIG. 2 is a block diagram of an example system and related operations according to aspects of this disclosure.
FIG. 3 is a block diagram of an example system and related operations according to aspects of this disclosure.
FIG. 4 is a method according to aspects of this disclosure.
FIG. 5 is a method according to aspects of this disclosure.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### Detailed Description

The description of exemplary embodiments of the present invention provided herein is merely exemplary and is intended for purposes of illustration only; the following description is not intended to limit the scope of the invention as claimed. Moreover, recitation of multiple embodiments having stated features is not intended to exclude other embodiments having additional features or other embodiments incorporating different combinations of the stated features.

It must also be noted that, the term "exemplary" is used in the sense of "example," rather than "ideal."

It must also be noted that, as used in the specification and the appended claims, the singular forms "a," "an" and "the" include plural referents unless the context clearly dictates otherwise.

By "comprising" or "containing" or "including" it is meant that at least the named compound, element, particle, or method step is present in the composition or article or method, but does not exclude the presence of other compounds, materials, particles, method steps, even if the other such compounds, material, particles, method steps have the same function as what is named.

Relative terms, such as "about," "substantially," or "approximately" are used to include small variations with specific numerical values (e.g., +/- x%,), as well as including the situation of no variation (+/-0%). In various embodiments, the numerical value x is less than or equal to 10 - e.g., less than or equal to 5, to 2, to 1, or smaller.

As used herein, "database" refers to any suitable database for storing information, electronic files or code to be utilized to practice embodiments of this disclosure. As used herein, "server" refers to any suitable server, computer or computing device for performing functions utilized to practice embodiments of this disclosure.

As used herein, "server" refers to any suitable server, computer or computing device for performing functions utilized to practice embodiments of this disclosure.

As used herein, "software" refers to programs or other operating information utilized by a processor or other computing hardware.

As used herein, "communication" can mean a conversation or correspondence or call between multiple users, such as one or a combination of telephonic, video, audio/video, text, and/or a hybrid of any of the preceding, and any type of meeting involving multiple participants.

As used herein, "engine" refers to a data-processing apparatus, such as a processor, configured to execute computer program instructions, encoded on computer storage medium, wherein the instructions control the operation of the engine. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus.

As used herein, "a computer storage medium" can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., solid-state memory that forms part of a device, disks, or other storage devices). In accordance with examples of the disclosure, a non-transient computer readable medium containing program can perform functions of one or more methods, modules, engines and/or other system components as described herein.

As used herein, "tangible, non-transitory memory" refers to computer program instructions, encoded on computer storage medium for execution by, or to control the operation of, data processing apparatus. Alternatively, or additionally, the program instructions can be encoded on an artificially-generated propagated signal, e.g., a machine-generated electrical, optical, or electromagnetic signal, which is generated to encode information for transmission to a suitable receiver apparatus for execution by a data processing apparatus. A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., solid-state memory that forms part of a device, disks, or other storage devices). In accordance with examples of the disclosure, a non-transient computer readable medium containing program can perform functions of one or more methods, modules, engines and/or other system components as described herein. The computer storage medium can also be, or be included in, random access memory (RAM), read-only memory (ROM), electronically erasable programmable ROM (EEPROM), flash memory or other memory technology, compact disc ROM (CD-ROM), digital versatile disks (DVD) or other optical storage, magnetic cassettes, magnetic tape, magnetic disk storage or other magnetic storage devices, or any other tangible, physical medium which can be used to store computer readable information.

As used herein, the terms "component," "engine," "model," "module," "system," "server," "processor," "memory," and the like are intended to include one or more computer-related units, such as but not limited to hardware, firmware, a combination of hardware and software, software, or software in execution. For example, a component may be, but is not limited to being, a process running on a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Many device users rely on their user devices, such as cell phones, to engage in conversation with others. With such newer cell phones having multiple access points for retrieving data such as LTE, Wi-Fi or even older data models, there can be many conversation types available. Yet, there remains a need to automatically change a conversation type based on certain factors, including but not limited to aspects that contribute to signal difficulties during a communication such as changes in signal strength, location, etc. Other factors that can contribute to signal degradations or disturbances to an ongoing communication between user devices can include factors such as ambient noise, background noise, jitter, echo, and bandwidth below a predetermined threshold that impact the user device signal.

This disclosure describes systems and methods that, among other things, can continue a conversation between users using user devices that may be experiencing signal difficulties (e.g., signal loss, degradation, etc.) by switching to a next lowest level medium when weak or interrupted signals are detected so as to compensate for a lack of the top-level functionality. For example, if the communication medium is one that includes a video call, if a signal deteriorates, the user device experiencing issues can be downgraded to the next lowest communication medium (e.g., a voice call) and that next lowest communication medium can be supplemented with aspects such as auto-fill video taking their place. Similarly, where a communication medium for a communication includes a voice call, the call can stay active, but the user device having signal issues can continue the communication using a medium that includes text messaging, which can be converted to voice and sent to the one or more other user devices of the communication.

In some aspects, the text messaging can be converted to voice using reconstructed audio based in part on a user's voice (e.g., using a sample of the user's voice) sent as metadata and recomposed on a reconstructed audio side with a neural codec language model (e.g., with audio prompt queues being used). In some aspects, the sample of the metadata used in voice reconstruction operations can be a few seconds recording of the respective user before the signal of the communication (e.g., the call quality) deteriorates below a threshold. Such a sample can be sufficient to recreate a voice reconstruction profile of the respective user.

In some aspects, this disclosure provides a computer-implemented method for auto-recovery of a communication. In some aspects, upon determining, using at least a carrier server, when the communication between a first user and a second user is subject to signal loss or includes a reception below a threshold for a first communication medium, the carrier server can cause communication to be switched from the first communication medium to a second communication medium. In some aspects, the first communication medium to the second communication medium can only be switched for the first user device or for the second user device, depending on if the respective user device is experiencing signal loss or otherwise deteriorated reception. In the process of determining is signal loss or reception is below a threshold, one or more components resident to or in communication with the carrier server can analyze in real-time whether the respective user device is experiencing signal loss, deteriorated signal quality, and/or includes reception below a threshold associated with the respective communication medium (e.g., video call medium, audio call medium, text medium, and combinations thereof).

In some aspects, this disclosure also provides a computer-implemented method for auto-recovery of a communication that includes upon determining, using at least a carrier server, when the communication between a first user and a second user is subject to signal loss or comprises a reception below a threshold for a first communication medium, switching the communication from the first communication medium to a second communication medium.

In some aspects, this disclosure also provides a communication system configured to switch communication mediums during a communication, that includes a processor and a carrier server configured to be in communication with a first user device and a second user device of the communication, the carrier server comprising a signal strength engine. A tangible, non-transitory memory can be included and configured to communicate with the processor, the tangible, non-transitory memory having instructions stored thereon that, in response to execution by the processor, cause the processor to perform operations that include determining, using the signal strength engine, if the communication between the first user device and the second user device is subject to signal loss or comprises a reception below a threshold for a first communication medium; for the communication that is subject to signal loss or the reception is determined below the threshold, switching by the carrier server the communication from the first communication medium to a second communication medium.

In some aspects, this disclosure describes systems and methods can seamlessly switch communication mediums based on aspects, such as signal quality related to user devices involved in the communication (e.g., signal of user device that is on a video call with another user device, such as an emergency operator user of a particular user device). The mediums can be ordered in any particular manner, including but not limited to a communication medium that includes video, a communication medium that includes voice, a communication medium that includes text messaging, etc. In some aspects, the sequence of changing communication mediums can go from mediums that require most recourses successively to the next most resource-intense medium. For example, it is understood that a communication medium that includes video can require the most resources, whereas a communication medium that includes text can require the least. In some aspects, a user of a user device may be using a particular communication medium (e.g., a medium that includes video call) and the user device may then experience signal loss or poor reception during the communication. In such a situation, the herein disclosed systems and methods can provide a solution to continue the communication by, in-part, switching one or more affected users to a different communication medium.

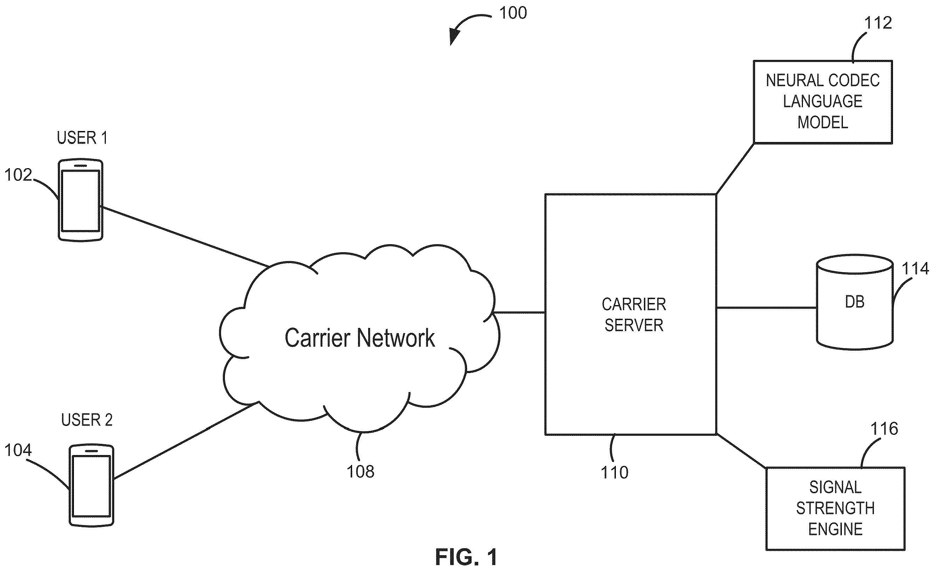

Turing to the Figures, wherein the purpose is to describe embodiments of this disclosure and not to limit the scope of the claims, FIG. 1 shows an exemplary system 100 for computer-implemented method for auto-recovery of a communication. System 100 can include a plurality of user devices, such as a first user device 102 and a second user device 104. The user devices 102, 104 can be in communication with a carrier network 108 and a carrier server 110. Network 108 can be configured to facilitate communications between user devices 102, 104 and include any desired combination of wireless and wired networks, including but not limited to the Internet, a LAN, a WAN, a WLAN, a cell network (e.g. 3G, 4G, 5G and the like), WiFi, WiMAX, and the like. User devices 102, 104 can be generally communicating in a wireless manner and network 108 can generally include components for communicating wirelessly with user devices 102, 104. However, the computing device 130 may be enabled to communicate via the communications network 140 in a wired or wireless manner as desired.

Each user device 102, 104 can be unique to a respective user, including special user types such as emergency operator users. In the illustrated example, user devices 102, 104 can be as a mobile phone, a laptop, a tablet, as well as any suitable device, such as smart phones, table computers, laptop computers, desktop computers, game consoles, cordless phones, or the like. While only users 102, 104 are shown in FIG.1, any number of users are contemplated as needed or required with respect to a communication between the user devices of FIG. 1.

Server 110 can be any suitable computing device, such any computer(s), processor(s), server(s), other device, or combination thereof. Server 110 can include software to provide instructions to the hardware of server 110 and/or may include a tangible, non-transitory memory, which includes computer program instructions that help control the operation of server 110. Server 110 can be configured to determine when a communication such as an audio call, a video call, etc., between user devices 102, 104 is subject to signal loss or includes a deteriorated reception below a threshold for a first communication medium. Server 110 can be configured to switch the communication from the first communication medium (e.g., a medium that utilizes video call) to a second communication medium (e.g., a medium that utilizes audio call).

Server 110 can also include or be in communication with one or more databases 114, including a database that includes a voice profile database, voice-to-text metadata database, a reconstructed text database, user metadata, a language database, etc. In some aspects, database(s) 114 can be resident on server 110, or any other suitable device. User devices 102, 104 as well as other components of server 110 can be in direct communication with, or indirect communication with database(s) 114. Carrier server 110 can include or be in communication with a signal strength engine 116 and a neural codec language model 112 capable of processing text message data from one or more the user devices associated with a communication and generating reconstructed voice data.

In some aspects, engine 116 can determine if one or more aspects of a communication includes a signal strength and/or a signal quality, including between respective user devices, network, server, and any aspects thereof (e.g., network node). In some aspects, engine 116 can determine signal strength and/or a signal quality by transmitting a ping between user devices, network, server, and/or the like. Additionally or alternatively, engine 116 can monitor signal quality and/or strength based in part on aspects such as packet loss to determine signal strength and/or a signal quality.

In some aspects, model 112 can be configured for text to speech synthesis (TTS). Model 112 can include or otherwise use a deep learning model that can develop and/or extract user voice metadata from an initial voice portion of the communication (e.g., a short voice sample, such as approximately 2-3 seconds, of one of the users of the communication, such as a short audio sample at the beginning of the communication before the signal has degraded or otherwise weakened). Model 112 can synthesize the text message data with a user voice profile so that the reconstructed voice data can include speech that can match tone, rhythm, cadence, etc., of the respective user. Model 112 can generate a voice data feed of a user and transmit this reconstructed voice data feed to carrier server 110 and/or any connected user devices of the communication.

In some aspects, model 112 can be or include one or more machine learning models. In some aspects, a machine learning model of this example can be generated based on applying respective training input with, optionally, the associated information paired with the output information as applied by a machine learning algorithm(s). The machine learning algorithm(s) may accept the foregoing aspects as training input, the output information and implement training using one or more techniques. For example, the machine learning models may be trained in one or more Convolutional Neural Networks (CNN), CNN with multiple-instance learning or multi-label multiple instance learning, Recurrent Neural Networks (RNN), Long-short term memory RNN (LSTM), Gated Recurrent Unit RNN (GRU), graph convolution networks, or the like or a combination thereof.

In some aspects, convolutional neural networks can directly learn the user voice features, which can work extremely well when there are large amounts of data to train on, whereas the other methods can be used with either traditional computer vision features, e.g., SURF or SIFT, or with learned embeddings (e.g., descriptors) produced by a trained convolutional neural network, which can yield advantages when there are only small amounts of data to train on. The trained machine learning models of this disclosure may be configured to provide quality designations for meeting data disclosed herein, including audio, text, video and other data thereof. Computerized methods of this disclosure that use machine learning models can include, but are not limited to, statistical analysis, autonomous or machine learning, and AI. AI may include, but is not limited to, deep learning, neural networks, classifications, clustering, and regression algorithms.

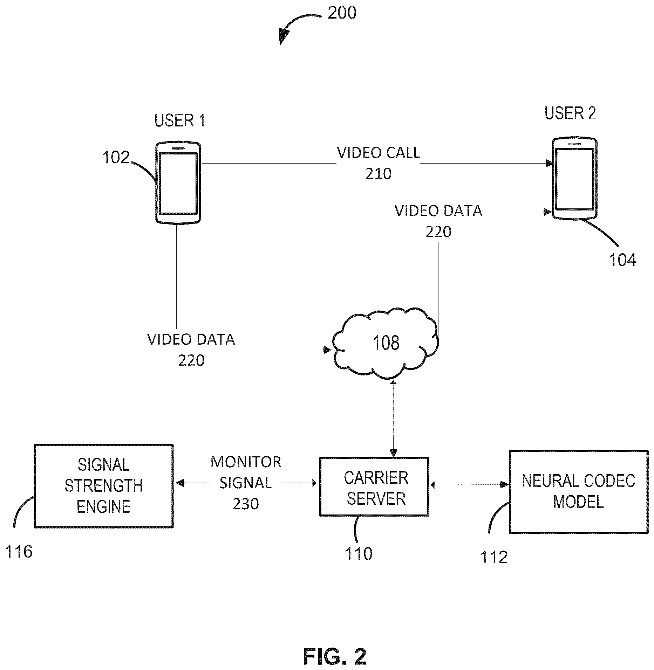

FIG. 2 is a block diagram of an example system 200 and related operations for auto-recovery of a communication (e.g., a voice call, a video call, etc.) from video call medium to the next lowest communication and/or to auto-switch communication mediums during the communication. As shown, user device 102 can initiate a communication via a video call 210 with user device 104. While only two user devices are shown in the example of FIG. 2, any number of devices associated with a communication can be included as needed or required. User device 102 can concurrently transmit video data 220 to network 108. Network 108 can transmit the received video data 220 to user device 104. Server 110 can be in bidirectional communication with network 108 to monitor signal strength of video call 210 and/or video data 220, including as between user devices 102, 104, and network 108. In some aspects, signal monitoring operations 230 can be performed by signal strength engine 116. If upon engine 116 determining that the communication between user devices 102, 104 is subject to signal loss or either device includes a reception below a threshold for a first communication medium (e.g., below a threshold for the video call 210), then the communication medium can be switched from the video call 210 the communication being directed through server 110 and/or network 108 at the next lowest medium that includes using video data 220. In some aspects, the first communication medium is a video call medium that includes a receive bandwidth of at least approximately 0.5 Mbps and/or a send bandwidth of at least approximately 0.5 Mbps.

In some aspects, server 110 can be in bidirectional communication with neural codec model 112 so as to receive video data 220, extract audio data and voice metadata from video data 220, and/or generate reconstructed voice data based on the extracted data for user devices detected by engine 116 as experiencing signal loss or reception below a threshold associated with a respective communication medium (e.g., a receive bandwidth and/or a send bandwidth of below at least approximately 0.5 Mbps). In some aspects, model 112 can include or be in communication with a TTS engine that can convert extracted text data from the communication (e.g., text data extracted from an audio data and/or video data) to user speech, according to a user voice profile, and transmit the reconstructed user speech to server 110 and/or any user devices connected therewith. In some aspects, if the signal loss and/or the reception deteriorates below the threshold for the respective communication medium, then only the respective device experiencing signal loss, deteriorated signal quality, and/or the reception below the threshold is switched to the second communication medium, which in FIG. 2 can include transitioning the initial video medium initially to voice supported by text medium a voice call with auto-fill video. In some aspects, the TTS engine of model 112 can be a computing device that is programmed to use extracted text from a portion of the communication and interject speech-related nuances to according to a voice profile of the respective user to simulate the communication to the one or more other user devices of the communication.

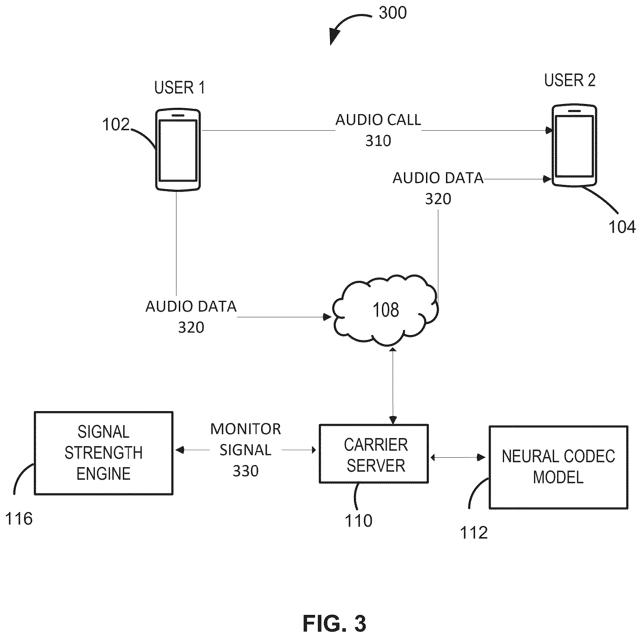

FIG. 3 is a block diagram of an example system 300 and related operations for auto-recovery of a communication from an audio call medium to the next lowest communication medium and/or to auto-switch communication mediums during the communication. As shown, user device 102 can initiate a communication via an audio call 310 with user device 104. User device 102 can concurrently transmit audio data 320 to network 108. Network 108 can transmit the received audio data 320 to user device 104. Server 110 can be in bidirectional communication with network 108 to monitor signal strength of audio call 310 and/or audio data 320, including as between user devices 102, 104, and network 108. In some aspects, signal monitoring operations 330 can be performed by signal strength engine 116.

In some aspects, server 110 can be in bidirectional communication with neural codec model 112 so as to receive audio data 320, extract text data and voice metadata, and/or generate reconstructed voice data based at least one the extracted data, voice metadata, and developed user voice profiles. Server 110 can transmit the reconstructed voice data to user devices detected by engine 116 as experiencing signal loss or reception below a threshold associated with a respective communication medium (e.g., where the communication medium is an audio call medium and the threshold is defined based at least on a Relative Signal Strength (RSSI) of approximately -60dBm).

In some aspects of FIG. 3, if the signal loss, signal quality, and/or the reception deteriorates below the threshold, then audio call 310 remains can remain active and only the user device experiencing signal difficulties is switched to the next lowest communication medium (e.g., here from an audio call medium initially to voice supported by text medium), including for example voice supported by reconstructed text messaging that is sent by server 110 to the user devices that remain stable and/or above the threshold. In some aspects, neural codec language model 112 can generate the reconstructed text messaging with voice using at least user voice metadata and text messaging extracted and based on the portion of the communication associated with the user device experiencing signal difficulties.
In some aspects, text message data can be extracted (e.g., by server 110 or components thereof, such as model 112) of only a portion of the communication from only the user device experiencing signal difficulties.

The reconstructed text messaging can be generated based in part on the extracted text message data and a voice reconstruction profile that is developed using at least model 112 considering an initial portion of the communication (e.g., a relatively sample of approximately 2-3 seconds from an earlier part of the communication). In some aspects, the reconstructed text messaging can include fine tuning by the model 112 and based at least in part on identified voice characteristics of the voice reconstruction profile. Model 112 can transmit the reconstructed voice data feed to the other of the user devices not experiencing signal difficulties, including via server 110 and/or network 108.

Although not shown in FIGs. 2 and 3, each depicted example contemplates switching to more than just the depicted mediums. For example and without limitation, the system in each instance can further monitor signals and upon determining when the communication between the user devices 102, 104 is below a threshold for the second communication medium (e.g., the firstly switched communication medium), the communication medium for the communication can again be switch from the second communication medium to a third communication medium that uses fewer signal resources than the second communication medium (e.g., an audio call medium to a text messaging or text message supplemented medium). In some aspects, the system in each instance can further monitor signals and upon determining when the communication between the user devices 102, 104 is restored (e.g., back above the threshold) or otherwise deemed stable or no signal loss is being detected, then the communication can be restored back to the first communication medium from the second and/or third communication medium for the respective user previously detected to be experiencing signal difficulties.

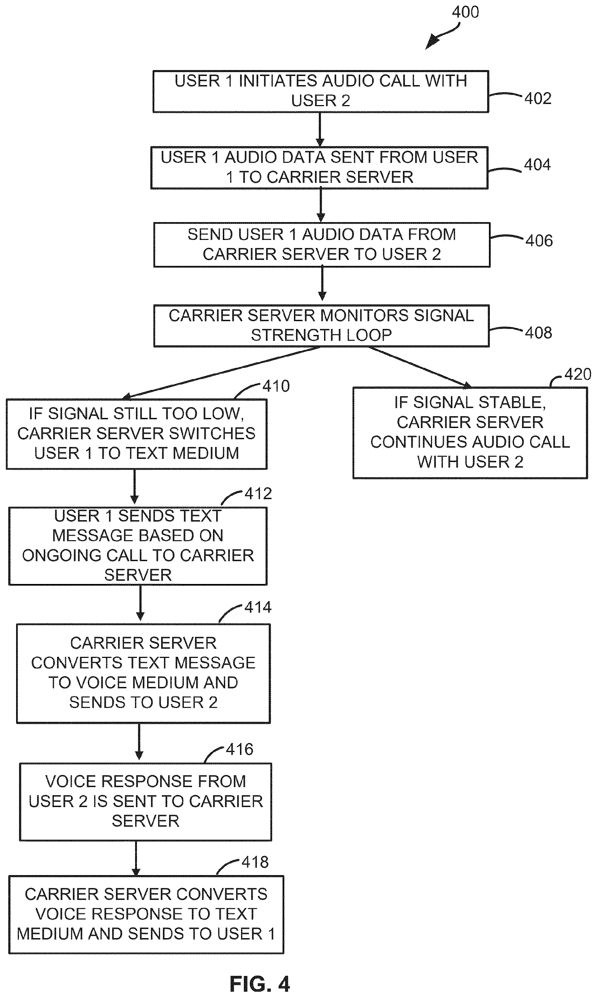

FIG. 4 is a block diagram of a method 400 for auto-recovery of a communication by switching communication mediums. At step 402, a first user of a first user device can initiate a communication of a first communication medium (e.g., an audio call) with a second user of a second user device. At step 404, data of the first user device (e.g., audio data) can be sent to a carrier server (e.g., carrier server 110) and at step 406 the carrier server can transmit data of the first user device to the second user device. At step 408, the carrier server in communication with the first and second user devices of the communication can monitor signal strength in a signal strength loop (e.g., signal of the first user device, the second user device, etc.). In some aspects, the carrier server 110 can monitor signal strength using a signal strength engine (e.g., signal strength engine 116).

At step 410, the monitored signal in step 408 has now been detected as being degraded or otherwise below a threshold of the respective communication medium (e.g., an audio call medium) and the carrier server switches the user device with the degraded or weakened signal (e.g., the first user device) to the next lowest communication medium (e.g., from an audio call medium to a text communication medium). At step 412, the first user of the first user device can send a text message that is based on the communication (e.g., an ongoing call) to the carrier server 110 and at step 414 the carrier server can convert or otherwise reconstruct the text message to voice and send to one or more other user devices of the communication (e.g., the second user device).

In some aspects, the text message used in step 412 can be generated automatically by extracting text message data of a portion of the communication from only the first user device and/or only the second user device experiencing signal loss or reception below the threshold. In some aspects, the text message can be converted or otherwise reconstructed to voice by entering the text message to voice via a TTS engine. In some aspects, the text message of step 412 can be converted or otherwise reconstructed in step 414 to voice using at least a neural codec language model (e.g., model 112), user voice metadata and the text messaging, to a voice data feed of the first user device. In some aspects, the text message can be converted or otherwise reconstructed in step 414 to voice by reconstructing the extracted text message data, using the neural codec language model and a voice reconstruction profile developed from an initial portion (e.g., an initial voice sample of the respective user recorded and stored during the communication), and any extracted text message data.

In step 416, the carrier server can receive the reconstructed voice data of the prior text message in the form of a voice response to the other user of the communication (e.g., to the second user device). In step 418, the carrier server converts the voice response from the second user device to text and sends the converted text message to the first user device.

If, however, after step 408 the signal strength is evaluated and at step 420 it is determined (e.g., by the signal strength engine of the carrier server) that the signal remains stable and/or above a threshold of the respective communication medium, then the carrier server can continue the communication in the communication medium without switching (e.g., continue the communication in an audio call medium with the second user device).

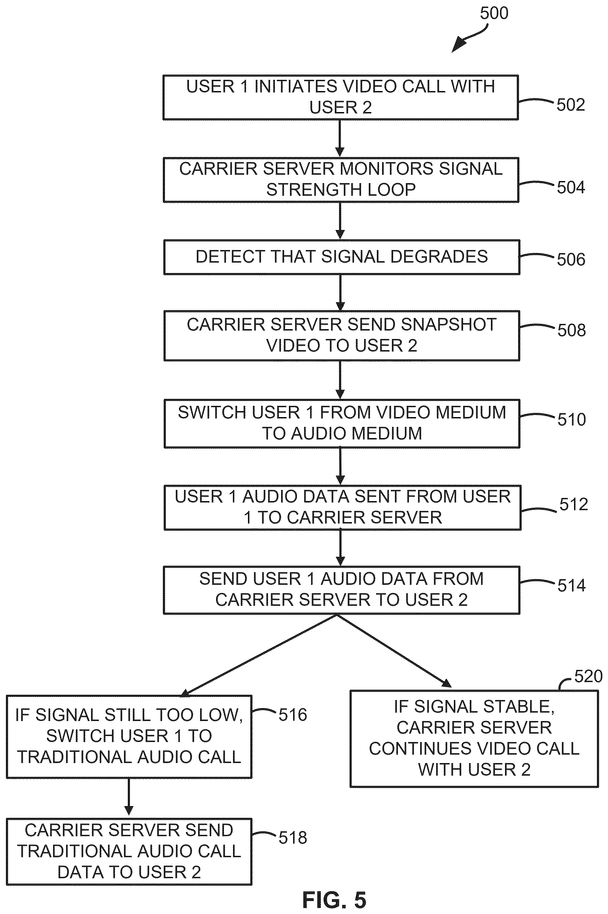

FIG. 5 is a block diagram of a method 500 for auto-recovery of a communication by switching communication mediums. At step 502, a first user of a first user device can initiate a communication of a first communication medium (e.g., a video call) with a second user of a second user device. At step 504, a carrier server (e.g., carrier server 110) in communication with the first and second user devices of the communication can monitor signal strength (e.g., signal of the first user device, the second user device, etc.). In some aspects, the carrier server 110 can monitor signal strength in step 504 using a signal strength engine (e.g., signal strength engine 116). At step 506, the monitored signal in step 504 has now been detected as being degraded and at step 508, the carrier server can send a shortened portion of the communication (e.g., a snapshot video from the first user device of the video call of the communication) to the second user device (e.g., from the first user device to server 110 then from the server 110 through network 108 to the second user device). In some aspects, server 110 can send a snapshot of the previous video to generate new video to send to the other user. In this respect, if the signal is still determined to be too low to maintain the quality of the audio call, the traditional phone audio medium can be used to re-join the communication and continue the conversation. For the other user, it is as if the first user device or the second user device (i.e., the user device determined to be experiencing signal difficulties) was having a video call the entire time.

At step 510, the first user device is switched from the first communication medium (video medium) to a second communication medium (audio medium). At step 512, audio data from the first user device is sent by the first user device to the carrier server and at step 514 the audio data is sent from the carrier server to the one or more other user devices. At step 516, the signal strength is evaluated and if it is determined (e.g., by the signal strength engine of the carrier server) that the signal remains below a threshold of the respective communication medium, then the user device with the deteriorated signal (e.g., the first user device) will have its communication medium switched to the next lowest communication medium (e.g., traditional audio call). At step 518, the carrier server sends data of the traditional audio call (e.g., the next lowest communication medium of step 516) to the second user device.

If, however, after step 514 the signal strength is evaluated and at step 520 it is determined (e.g., by the signal strength engine of the carrier server) that the signal remains stable and/or above a threshold of the respective communication medium, then the carrier server can continue the communication in the communication medium without switching (e.g., continue the communication in a video call medium with the second user device).

According to certain embodiments, systems and methods of this disclosure can be included in user-facing front-end including software, firmware, and/or hardware to integrate at least a portion of a communication of a user from a user device. In some embodiments, this interface of a user device associated with systems and methods herein can include a mobile application ("app") or other software executable on a user device, such as a mobile computing device (e.g. a smart phone). It is understood that any mobile computing device of this disclosure can be configured to communicate with one or more servers (e.g., carrier server 110). In another embodiment, the interface may include a web-based application accessible through a browser or other software, or a desktop application. The app can be configured to provide or support functionality of this disclosure.

According to certain embodiments, the one or more servers of the herein disclosed system (e.g., carrier server 110), can each be connected directly or wirelessly (e.g., 3G/4G/5G, RF, a local wireless network, and/or the like). The server(s) can be operatively connected to one or more web servers across one or more networks, each server operable to permanently store and/or continuously update a database of master data. Servers of this disclosure can include back-end architecture with, or be in communication with, one or more of database server(s), whereby functionality of the system may be split between multiple servers, which may be provided by one or more discrete providers. In an example embodiment, the database server may store master data as well as logging and trace information. Software of the database server may be based on the object-relational database system PostgresSQL the database server is not so limited other approaches may be used as needed or required. This database server is not limited to only organizing and storing data and instead, it may be also used to eliminate a need of having an application server (e.g., 2nd Layer). In some embodiments, almost every functional requirement may be realized by using the database's programming language, PL/pgSQL. The database may also provide an API to the web server for data interchange based on JSON specifications. In some embodiments, the database server may also directly interact with the described functionality of respective computing devices.

In some examples, a computer system of this disclosure can be capable of implementing aspects of the present disclosure in accordance with one or more embodiments described herein, including those examples shown in FIGS. 1-5. It should be appreciated that any computer system of examples of this disclosure may be implemented within a single computing device or a computing system formed with multiple connected computing devices. The computer system of this disclosure may be configured to perform various distributed computing tasks, in which processing and/or storage resources may be distributed among the multiple devices.

In some examples, the computer system can include a processing unit ("CPU"), a system memory, and a system bus that couples the memory to the CPU. The computer system further includes a mass storage device for storing program modules. The program modules may be operable to analyze data from any herein disclosed data feeds, databases, classify user states based on the data feeds, determine responsive actions, and/or control any related operations. The program modules may include an application for performing data acquisition and/or processing functions as described herein. In some examples, the mass storage device can be connected to the CPU through a mass storage controller connected to the bus. The mass storage device and its associated computer-storage media provide non-volatile storage for the computer system. Although the description of computer-storage media contained herein refers to a mass storage device, such as a hard disk or CD-ROM drive, it should be appreciated by those skilled in the art that computer-storage media can be any available computer storage media that can be accessed by the computer system.

By way of example and not limitation, computer storage media (also referred to herein as "computer-readable storage medium" or "computer-readable storage media") may include volatile and non-volatile, removable and non-removable media implemented in any method or technology for storage of information such as computer-storage instructions, data structures, program modules, or other data. For example, computer storage media includes, but is not limited to, RAM, ROM, EPROM, EEPROM, flash memory or other solid state memory technology, CD-ROM, digital versatile disks ("DVD"), HD-DVD, BLU-RAY, or other optical storage, magnetic cassettes, magnetic tape, magnetic disk storage or other magnetic storage devices, or any other medium which can be used to store the desired information and which can be accessed by the computer system. "Computer storage media", "computer-readable storage medium" or "computer-readable storage media" as described herein do not include transitory signals.

According to various embodiments, the computer system may operate in a networked environment using connections to other local or remote computers through a network via a network interface unit connected to the bus. The network interface unit may facilitate connection of the computing device inputs and outputs to one or more suitable networks and/or connections such as a local area network (LAN), a wide area network (WAN), the Internet, a cellular network, a radio frequency (RF) network, a Bluetooth-enabled network, a Wi-Fi enabled network, a satellite-based network, or other wired and/or wireless networks for communication with external devices and/or systems.

In some examples, the computer system may also include an input/output controller for receiving and processing input from any of a number of input devices. Input devices may include one or more of keyboards, mice, stylus, touchscreens, microphones, audio capturing devices, and image/video capturing devices. An end user may utilize the input devices to interact with a user interface, for example a graphical user interface, for managing various functions performed by the computer system. The bus may enable the processing unit to read code and/or data to/from the mass storage device or other computer-storage media.

In some examples, the computer-storage media may represent apparatus in the form of storage elements that are implemented using any suitable technology, including but not limited to semiconductors, magnetic materials, optics, or the like. The computer-storage media may represent memory components, whether characterized as RAM, ROM, flash, or other types of technology. The computer storage media may also represent secondary storage, whether implemented as hard drives or otherwise. Hard drive implementations may be characterized as solid state or may include rotating media storing magnetically-encoded information. The program modules, which include the data feed application, may include instructions that, when loaded into the processing unit and executed, cause the computer system to provide functions associated with one or more embodiments illustrated in the figures of this disclosure. The program modules may also provide various tools or techniques by which the computer system may participate within the overall systems or operating environments using the components, flows, and data structures discussed throughout this description.

In some examples, the program modules may, when loaded into the processing unit and executed, transform the processing unit and the overall computer system from a general-purpose computing system into a special-purpose computing system. The processing unit may be constructed from any number of transistors or other discrete circuit elements, which may individually or collectively assume any number of states. More specifically, the processing unit may operate as a finite-state machine, in response to executable instructions contained within the program modules. These computer-executable instructions may transform the processing unit by specifying how the processing unit transitions between states, thereby transforming the transistors or other discrete hardware elements constituting the processing unit.

Encoding the program modules may also transform the physical structure of the computer-storage media. The specific transformation of physical structure may depend on various factors, in different implementations of this description. Examples of such factors may include but are not limited to the technology used to implement the computer-storage media, whether the computer storage media are characterized as primary or secondary storage, and the like. For example, if the computer storage media are implemented as semiconductor-based memory, the program modules may transform the physical state of the semiconductor memory, when the software is encoded therein. For example, the program modules may transform the state of transistors, capacitors, or other discrete circuit elements constituting the semiconductor memory.

As another example, the computer storage media may be implemented using magnetic or optical technology. In such implementations, the program modules may transform the physical state of magnetic or optical media, when the software is encoded therein. These transformations may include altering the magnetic characteristics of particular locations within given magnetic media. These transformations may also include altering the physical features or characteristics of particular locations within given optical media, to change the optical characteristics of those locations. Other transformations of physical media are possible without departing from the scope of the present description, with the foregoing examples provided only to facilitate this discussion.

In some aspects, a first user using a first user device can be speaking to a second user using a second user device using a video call. Using the method and systems of this disclosure, the first user device can start to experience signal difficulties (e.g., signal loss) to the point where the second user using the second user device is unable to see or hear the communication. Upon determining that the second user device is unable to see or hear the communication, then the communication can automatically switch to a phone call, keeping the previous channel open but sending the respective user's audio through the device. If the system determines that the signal is still too weak for an audio call, the system can cause the respective user device to switch to text and the text can be processed on the carrier side of the call and which can process this to audio to send to the other user device.

In some examples, the systems and methods of this disclosure can be used in emergency situations where one the users is an emergency operator user and another of the users does not have sufficient signal for a communication (e.g., a video call, a voice call, etc.) yet does not want to lose contact with other user(s) they are talking to (e.g., for a contact center where the user is waiting in queue and gets disconnected accidentally). The systems and methods of this disclosure can be advantageously prevent users of such communication from having to wait in the queue again.

The present invention has been described above with reference to a number of exemplary embodiments and examples. It should be appreciated that the particular embodiments shown and described herein are illustrative of the invention, the scope of which is set forth in the claims. Further, unless otherwise noted, various illustrated steps of a method can be performed sequentially or at the same time, and not necessarily be performed in the order illustrated. It will be recognized that changes and modifications may be made to the exemplary embodiments without departing from the scope of the present invention. These and other changes or modifications are intended to be included within the scope of the present invention, as expressed in the following claims.

## Claims

1. A computer-implemented method for switching communication mediums during a communication, comprising:
monitoring, by a signal strength engine of a carrier server, a signal strength of the communication between a first user device and a second user device;
determining, by the carrier server, if the signal strength is subject to a signal loss or the reception is determined below the threshold; and
switching by the carrier server, the communication from a first communication medium to a second communication medium.

2. The computer-implemented method of Claim 1, further comprising:
sending, by the carrier server, audio data of the first user device to the second user device; and
upon determining, by the carrier server, the signal strength is restored or stable with respect to previous signal loss or the reception being below the threshold, switching the communication back to the first communication medium from the second communication medium.

3. The computer-implemented method of Claim 1 or claim 2, wherein the switching the communication from the first communication medium to the second communication medium comprises only switching the first user device or the second user device to the second communication medium.

4. The computer-implemented method of any preceding Claim, wherein if the signal loss and/or the reception deteriorates below the threshold, then only the first user device and/or the second user device experiencing signal loss or comprising the reception below the threshold is switched to the second communication medium comprising a voice call with auto-fill video.

5. The computer-implemented method of any preceding Claim, wherein the communication is a voice call, wherein if the signal loss and/or the reception deteriorates below the threshold, then the voice call remains active and only the first user device and/or the second user device experiencing signal loss or comprising the reception below the threshold is switched to the second communication medium comprising text messaging converted to voice and sent to the other user device.

6. The computer-implemented method of any preceding Claim, wherein the communication is a voice call and the second communication medium comprises reconstructed text messaging, the operations further comprising:
extracting text message data of a portion of the communication from only the first user device and/or the second user device experiencing signal loss or comprising the reception below the threshold is switched to the second communication medium;
reconstructing the extracted text message data, using at least a neural codec language model, a voice reconstruction profile developed from an initial portion of the communication, and the extracted text message data, to a reconstructed voice data feed of the first user device and/or the second user device experiencing signal loss or comprising the reception below the threshold.

7. The computer-implemented method of any preceding Claim, further comprising:
upon determining, using the signal strength engine, when the communication between the first user device and the second user device is below a threshold for the second communication medium, switching the communication from the second communication medium to a third communication medium.

8. A computer-implemented method for auto-recovery of a communication, comprising:
upon determining, using at least a carrier server, when the communication between a first user device and a second user device is subject to signal loss or comprises a reception below a threshold for a first communication medium, switching the communication from the first communication medium to a second communication medium.

9. The computer-implemented method of Claim 8, wherein the determining, using at least the carrier server, when the communication between the first user device and the second user device is subject to signal loss or comprises the reception below the threshold comprises analyzing in real-time whether the first user device and/or the second user device is experiencing signal loss or comprises the reception below the threshold; and
the switching the communication from the first communication medium to a second communication medium comprises only switching, for the first user device and/or the second user device experiencing signal loss or comprising the reception below the threshold, from the first communication medium to a second communication medium.

10. The computer-implemented method of Claim 9, wherein if the signal loss and/or the reception deteriorates below the threshold, then only the first user device and/or the second user device experiencing signal loss or comprising the reception below the threshold is switched to the second communication medium comprising a voice call with auto-fill video.

11. The computer-implemented method of Claim 9 or Claim 10, wherein the communication is a voice call,
wherein if the signal loss and/or the reception deteriorates below the threshold, then the voice call remains active and only the first user device and/or the second user device experiencing signal loss or comprising the reception below the threshold is switched to the second communication medium comprising text messaging reconstructed, using at least a neural codec language model, user voice metadata and the text messaging, to a voice data feed of the first user device and/or the second user device experiencing signal loss or comprising the reception below the threshold.

12. The computer-implemented method of Claim 8, wherein the communication is a voice call and the second communication medium comprises reconstructed text messaging, the method further comprising:
extracting text message data of a portion of the communication from only the first user device and/or the second user device experiencing signal loss or comprising the reception below the threshold is switched to the second communication medium;
reconstructing the extracted text message data, using at least a neural codec language model, a voice reconstruction profile developed from an initial portion of the communication, and the extracted text message data, to a reconstructed voice data feed of the first user device and/or the second user device experiencing signal loss or comprising the reception below the threshold and optionally further comprising:
transmitting the reconstructed voice data feed to the other of the first user device and/or the second user device not experiencing signal loss or comprising the reception below the threshold from the first communication medium to a second communication medium.

13. The computer-implemented method of any of Claims 8 to 10, wherein the first communication medium is a video call medium comprising a receive bandwidth of at least approximately 0.5 Mbps; or
wherein the first communication medium is a video call medium comprising a send bandwidth of at least approximately 0.5 Mbps an/or wherein the second communication medium is an audio call medium comprising at least a Relative Signal Strength (RSSI) of approximately - 60dBm.

14. The computer-implemented method of and of Claims 8 to 12, wherein the first communication medium is an audio call medium comprising at least a Relative Signal Strength (RSSI) of approximately -60dBm.

15. A communication system configured to switch communication mediums during a communication, comprising:
a processor;
a carrier server configured to be in communication with a first user device and a second user device of the communication, the carrier server comprising a signal strength engine; and
a tangible, non-transitory memory configured to communicate with the processor, the tangible, non-transitory memory having instructions stored thereon that, in response to execution by the processor, cause the processor to perform the method of any of claims 1 to 14.
